(19) **Europäisches Patentamt / European Patent Office / Office européen des brevets**

(11) **EP 2 179 326 B1**

(12) **FASCICULE DE BREVET EUROPEEN**

(45) Date de publication et mention de la délivrance du brevet:
**27.09.2017 Bulletin 2017/39**

(21) Numéro de dépôt: **08775283.8**

(22) Date de dépôt: **22.07.2008**

(51) Int Cl.:
**H01S 3/0941** *(2006.01)*  **H01S 3/16** *(2006.01)*
**H01S 3/08** *(2006.01)*  **H01S 3/067** *(2006.01)*

(86) Numéro de dépôt international:
**PCT/EP2008/059611**

(87) Numéro de publication internationale:
**WO 2009/013294 (29.01.2009 Gazette 2009/05)**

(54) **LASER BI-FREQUENCE FIBRE PAR MELANGE D'ONDES DANS DES FIBRES OPTIQUES AMPLIFICATRICES**

FASER-ZWEIFREQUENZLASER MIT WELLENMISCHUNG IN OPTISCHEN VERSTÄRKUNGSFASERN

FIBRE DUAL-FREQUENCY LASER WITH WAVE MIXING IN AMPLIFICATION OPTICAL FIBRES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.07.2007 FR 0705379**

(43) Date de publication de la demande:
**28.04.2010 Bulletin 2010/17**

(73) Titulaire: **THALES**
**92400 Courbevoie (FR)**

(72) Inventeurs:
• **MOLIN, Stéphanie**
  **91210 Draveil (FR)**
• **DOLFI, Daniel**
  **91400 Orsay (FR)**
• **MORVAN, Loïc**
  **91400 Orsay (FR)**
• **HUIGNARD, Jean-Pierre**
  **75013 Paris (FR)**

(74) Mandataire: **Esselin, Sophie**
**Marks & Clerk France**
**Conseils en Propriété Industrielle**
**Immeuble Visium**
**22 avenue Aristide Briand**
**94117 Arcueil Cedex (FR)**

(56) Documents cités:
**FR-A- 2 867 000**

• **LOH W H ET AL: "40 GHz optical-millimetre wave generation with a dual polarisation distributed feedback fibre laser" ELECTRONICS LETTERS, IEE STEVENAGE, GB, vol. 33, no. 7, 27 mars 1997 (1997-03-27), pages 594-595, XP006007240 ISSN: 0013-5194**
• **FISCHER B ET AL: "NONLINEAR WAVE MIXING AND INDUCED GRATINGS IN ERBIUM-DOPED FIBER AMPLIFIERS" OPTICS LETTERS, OSA, OPTICAL SOCIETY OF AMERICA, WASHINGTON, DC, US, vol. 18, no. 24, 15 décembre 1993 (1993-12-15), pages 2108-2110, XP002027113 ISSN: 0146-9592**
• **FRISKEN S J: "TRANSIENT BRAGG REFLECTION GRATINGS IN ERBIUM-DOPED FIBER AMPLIFIERS", OPTICS LETTERS, OSA, OPTICAL SOCIETY OF AMERICA, WASHINGTON, DC, US, vol. 17, no. 24, 15 December 1992 (1992-12-15), pages 1776-1778, XP000334834, ISSN: 0146-9592**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention se rapporte à des lasers bi-fréquences « tout-fibre » comportant le mélange à deux ondes dans des fibres optiques amplificatrices à maintien de polarisation. Chacune des deux fréquences optiques obtenues se propage en polarisation rectiligne selon l'un des axes propres de la fibre.

De tels lasers ont pour but de répondre au besoin en sources micro-ondes de très grande pureté spectrale, nécessaires dans les générations futures de systèmes radar, mais aussi de façon plus générale, pour la distribution de références de fréquence dans les systèmes complexes et dans des capteurs fibrés.

Comme ce fut le cas dans les systèmes de télécommunication, l'optique se substitue aujourd'hui progressivement aux liaisons par câbles coaxiaux dans les systèmes radar. En effet, outre leurs moindres poids, encombrement, coût et leur insensibilité aux perturbations électromagnétiques, les fibres optiques présentent sur le câble coaxial les avantages fondamentaux suivants : leurs pertes sont faibles (0,3 dB/km contre 1000 dB/km pour les câbles), et leur dispersion est négligeable sur une large bande-passante hyperfréquence (une porteuse optique, de fréquence avoisinant 100 THz, peut être modulée sur une plage de 20 à 40 GHz sans limites dues à la dispersion chromatique de la fibre, la bande-passante d'un câble ne dépassant pas quelques GHz).

Ainsi, certaines fonctions réalisées totalement dans le domaine électrique tendent aujourd'hui à faire appel à des technologies photoniques. Par exemple, tandis que les synthétiseurs actuels délivrent des signaux micro-ondes par mélanges successifs de fréquences électriques plus faibles, dégradant le rapport signal à bruit à chaque multiplication, la génération d'ondes hyperfréquence grâce au mélange hétérodyne de deux fréquences optiques autour de 1550 nm peut répondre aux besoins d'oscillateurs locaux de grande pureté spectrale dans les futurs radars optiques. Pour ce type d'application, il est nécessaire que le battement ait une largeur spectrale inférieure au kHz et que le bruit de phase environnant soit de l'ordre de - 130 dBc/Hz à 10 kHz de la fréquence centrale du signal [l'unité dBc signifie decibels par rapport à la porteuse (decibels relative to the carrier en anglais) et représente le rapport (en décibels) de puissance d'un signal par rapport à sa porteuse. L'unité dB est considérée comme unité SI, mais peut être remplacer par 10xlog10(puissance signal/ puissance porteuse]. Plusieurs techniques ont d'ores et déjà été proposées dans le but de réaliser des lasers bi-fréquence capables de générer de tels signaux micro-onde.

Une première méthode consiste en l'utilisation de diodes laser bi-fréquence ou de deux diodes laser couplées comme décrit dans les références suivantes : T. Hidaka, S. Matsuura, M. Tani et K. Sakai, « CW terahertz wave generation by photomixing using a two-longitudinal mode laser diode », Electron. Lett. Vol. 33, 2039 (1997), M.D. Pelusi, HF Liu et D. Novak, « THz optical beat frequency generation from a single mode locked semiconductor laser », Appl. Phys. Lett. Vol. 71, 449 (1997),X. Wang, W. Mao, M. Al-Mumin, S. A. Pappert, J. Hong et G. Li, "Optical generation of microwave/millimeter-wave signals using two-section gain-coupled DFB lasers", IEEE Phot. Tech. Lett. Vol. 11, No. 10, 1292 (1999).

Les avantages de ces sources sont leur compacité et leur grande accordabilité, puisqu'elles permettent de générer des signaux micro-onde de fréquence ajustable sur plusieurs dizaines de GHz. Cependant il est difficile d'obtenir une largeur spectrale suffisante en utilisant des diodes laser ; en effet, la qualité spectrale du battement obtenu reste insuffisante au regard des exigences du radar, sa largeur à mi-hauteur étant typiquement de l'ordre de la dizaine de MHz.

D'autres techniques mettent à profit les propriétés de lasers solides et sont notamment décrits dans les références suivantes : M. Alouini, B. Benazet, M. Vallet, M. Brunel, P. Di Bin, F. Bretenaker, A. Le Floch et P. Thony, "Offset phase locking of Er: Yb: Glass Laser eigenstates for RF Photonics applications", IEEE Phot. Tech. Lett. Vol. 13, No. 4, 367 (2001), A.J.C. Vieira, P.R. Herczfeld, A. Rosen, M. Ermold, E.E. Funk, W.D. Jemison et K.J. Williams, « A mode-locked microchip laser optical transmitter for fiber radio », IEEE TTTM, Vol. 49, No. 10, 1882 (2001), L. Morvan, D. Dolfi, J.-P. Huignard, S. Blanc, M. Brunel, M. Vallet, F. Bretenaker et A. Le Floch, « Dual-frequency laser at 1.53 $\mu$m for generating high-purity optically carried microwave signals up to 20 GHz », CLEO 2004.

De tels lasers sont extrêmement compacts et le battement hyperfréquence obtenu présente d'excellentes caractéristiques spectrales : la largeur spectrale peut être inférieure au kHz et le niveau de bruit de phase au pied du signal répond parfaitement aux exigences radar (jusqu'à - 130 dBc/Hz à 20 kHz de la porteuse hyperfréquence). De plus, l'accordabilité du signal microonde généré s'étend sur quelques GHz. Ces sources répondent aux besoins des futurs radars, leur unique point faible réside dans la nécessité de boucles de contrôle opto-électronique de verrouillage de phase, assurant la stabilité en fréquence du battement micro-onde.

Certaines solutions visant à utiliser des dispositifs tout-fibre mettent déjà en oeuvre des fibres optiques dopées pour réaliser des lasers bi-fréquence. W.H. Loh, J.P. de Sandro, G.J. Cowle, B.N. Samson et A.D. Ellis, « 40 GHz optical-millimetre wave generation with dual polarisation distributed feedback fibre laser », Electr. Lett., Vol. 33, No. 7, 594 (1997), S.V. Chernikov, R. Kashyap, P.F. McKee, J.R. Taylor, « Dual frequency all fibre grating laser source », Electr. Lett. Vol. 29, No. 12, 1089 (1993), S. Li, H. Ding et K.T. Chan, « Erbium-doped fibre lasers for dual wavelength operation », Electr. Lett. Vol. 33, No. 1, 52 (1997), décrivent des dispositifs dans lesquels des réseaux de Bragg photo-inscrits dans des fibres optiques sont utilisés comme miroirs dans des lasers à fibre dopée erbium, pour atteindre un fonctionnement bi-fréquence.

Il est possible, par ces dispositifs, de générer des battements hyperfréquence dont la largeur peut être inférieure au kHz, leur accordabilité restant toutefois limitée. Ces lasers sont sujets aux instabilités inhérentes à la propagation dans les fibres, à savoir notamment des variations de la phase optique accumulée et qui affectent directement la phase du signal hyperfréquence généré ultérieurement (conséquentes aux variations thermiques ou aux contraintes subies par la fibre).

S. J. Frisken "Transient Bragg reflection gratings in erbium-doped fiber amplifiers", Optics Letters Vol. 17, no 24, 15.12.1992 décrit un filtre avec amplification formé par une source laser DFB émettant une onde optique principale à 1535,9 nm, qui est polarisée par un polarisateur, et un coupleur 50:50 pour diviser ladite onde principale polarisée en deux ondes optiques qui interférent dans une fibre dopée à l'erbium. Selon l'invention il est proposé une nouvelle approche de laser bi-fréquence fibré dans lequel le réseau de Bragg photo-inscrit utilisé dans les références précédentes, est un réseau holographique, dynamique, automatiquement adapté aux ondes en présence. Le processus optique mis en jeu est un effet non linéaire de couplage entre deux ondes inscrivant elles-même leur réseau de diffraction, par l'intermédiaire d'un hologramme de gain dans le milieu amplificateur.

Plus précisément, l'invention a pour objet un laser bi-fréquence fibré comportant une source optique émettant au moins une onde optique principale à une première longueur d'onde, un milieu amplificateur fibré caractérisé en ce qu'il comporte des moyens pour faire interférer deux ondes optiques primaires issues de l'onde optique principale de manière à créer un réseau de diffraction au sein dudit milieu amplificateur, l'onde optique principale étant ainsi diffractée par ledit réseau de diffraction créé, en une seconde onde optique émettant à une seconde longueur d'onde.

Selon une variante de l'invention, le milieu amplificateur comporte une fibre dopée à maintien de polarisation.

Selon une variante de l'invention, le laser bi-fréquence comporte un coupleur permettant de créer les deux ondes optiques primaires à partir de l'onde optique principale.

Selon une variante de l'invention, le milieu amplificateur fibré comporte un circulateur optique.

Selon une variante de l'invention, le milieu amplificateur comporte une fibre optique, une pompe optique et un multiplexeur en longueur d'onde.

Selon une variante, le milieu amplificateur comporte une fibre optique dopée possédant deux gaines concentriques ou plusieurs coeurs.

Selon une variante de l'invention, le laser bi-fréquence comporte un circulateur sur le trajet de chacune des ondes optiques primaires, de manière à récupérer en sortie dudit laser bi-fréquence, deux ondes optiques secondaires.

Selon une variante de l'invention, le milieu amplificateur comporte une fibre optique, deux pompes optiques et deux multiplexeurs en longueur d'onde.

Selon une variante de l'invention, le laser bi-fréquence comporte des moyens de réflexion de ladite onde principale de manière à créer le réseau de diffraction par interférence entre ladite onde optique principale et l'onde réfléchie de ladite onde optique principale.

Les moyens de réflexion peuvent comporter un composant de type miroir de Bragg ou miroir métallique.

Les moyens de réflexion peuvent également comporter une fibre optique intégrant une extrémité réflectrice vis à vis de l'onde optique principale.

L'invention sera mieux comprise et d'autres avantages apparaîtront à la lecture de la description qui va suivre et des figures annexées parmi lesquelles :

-   les figure 1a, 1b et 1c schématisent les étapes du processus physique de mélange à deux ondes dans un milieu amplificateur ;
-   la figure 2 illustre la génération de l'onde secondaire au sein du réseau de diffraction créé dans le laser bi-fréquence de l'invention ;
-   la figure 3 illustre un premier exemple de réalisation de laser bi-fréquence selon l'invention ;
-   la figure 4 illustre un second exemple de laser bi-fréquence selon l'invention ;
-   la figure 5 illustre un troisième exemple de laser bi-fréquence selon l'invention ;
-   la figure 6 illustre une variante de l'invention dans laquelle une fibre incorpore un réseau.

De manière générale, le milieu amplificateur considéré dans le cadre de cette invention est une fibre optique dopée, à maintien de polarisation, préalablement placée en inversion de population. Le réseau de diffraction créé étant, par essence, adapté aux ondes optiques générées, la stabilité spectrale du battement hyperfréquence généré est garantie. Les ondes optiques voyageant dans le même milieu et subissant les mêmes perturbations, leur battement laisse présager d'une excellente pureté spectrale. La fréquence du signal micro-onde obtenu est susceptible d'être contrôlée par contraintes appliquées sur la fibre, ou par accordabilité en longueur d'onde de la source laser d'excitation, sans effet néfaste sur sa stabilité.

L'invention consiste à provoquer du mélange d'onde, entre deux ondes de fréquence optique dites primaires à la fréquence $v_1$, au sein d'une fibre optique amplificatrice à maintien de polarisation, afin d'y générer une onde de fréquence optique dite secondaire à une fréquence $v_2 \neq v_1$. Ce type de mélange d'ondes est notamment décrit dans les articles suivants : A. Brignon, G. Feugnet, J.-P. Huignard, and J.-P. Pocholle, "Efficient degenerate four-wave mixing in a diode-pumped microchip Nd:YV04 amplifier", Opt. Lett. Vol. 20, No. 6, 548-550 (1995), P. Yeh, « Two-wave mixing in nonlinear media », IEEE. J. Quantum Electr. Vol. 25, No. 3, 484-518 (1989), S.T. Fisken, «Transient Bragg Reflection gratings in erbium-doped fiber amplifiers »,Opt. Lett. Vol. 17, No. 24, 1776-1778 (1992), B. Fischer, J.L. Zyskind, J.W. Sulhoff and D.J. DiGiovanni, « Nonlinear wave mixing and induced gratings in erbium-doped fiber amplifiers » , Opt. Lett. Vol. 18, No. 24, 2108-2110 (1993).

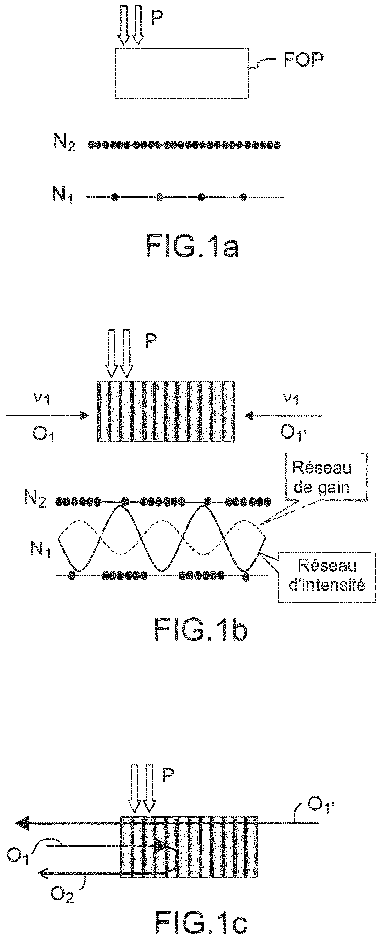

Les figures 1a, 1b et 1c schématisent les étapes du processus physique de mélange à deux ondes dans un milieu amplificateur. Le milieu amplificateur est ici une fibre optique dopée FOP préalablement pompée optiquement par des moyens de pompage P, pour atteindre l'inversion de population entre ses niveaux d'énergie, notés N1 et N2 (figure 1a). Considérons comme représenté en figure 1b, deux ondes optiques de même fréquence $\nu_1 = \dfrac{c}{\lambda_1}$ (où $c$ et $\lambda_1$ représentent respectivement la vitesse de la lumière et la longueur d'onde dans le vide), de même état de polarisation, cohérentes entre elles, et de longueur de cohérence $L_{coh}$ au moins égale à la longueur $L$ de la fibre. Ces deux ondes $O_1$ et $O_1'$ sont injectées dans le milieu amplificateur en sens opposés et y interfèrent. Il en résulte une variation spatiale périodique de l'intensité totale de l'onde à la fréquence $\nu_1$ dans le milieu, qui conduit à une saturation périodique (au niveau des franges brillantes) du gain dans le milieu amplificateur. Le réseau de gain ainsi généré permet la diffraction et le couplage des deux ondes qui l'ont créé. Ainsi, comme représenté en 1c, l'onde $O_1$ se diffracte sur le réseau de gain qu'elle a inscrit par interférence avec l'onde $O_1'$, pour donner une onde diffractée, $O_2$, se propageant dans le même sans que l'onde $O_1'$. Notons que le pas du réseau de gain vaut $\Lambda = \dfrac{\lambda_1}{2n} = \dfrac{c}{2n\nu_1}$ (où $n$ représente l'indice de réfraction du milieu amplificateur vu par les ondes $O_1$ et $O_1'$).

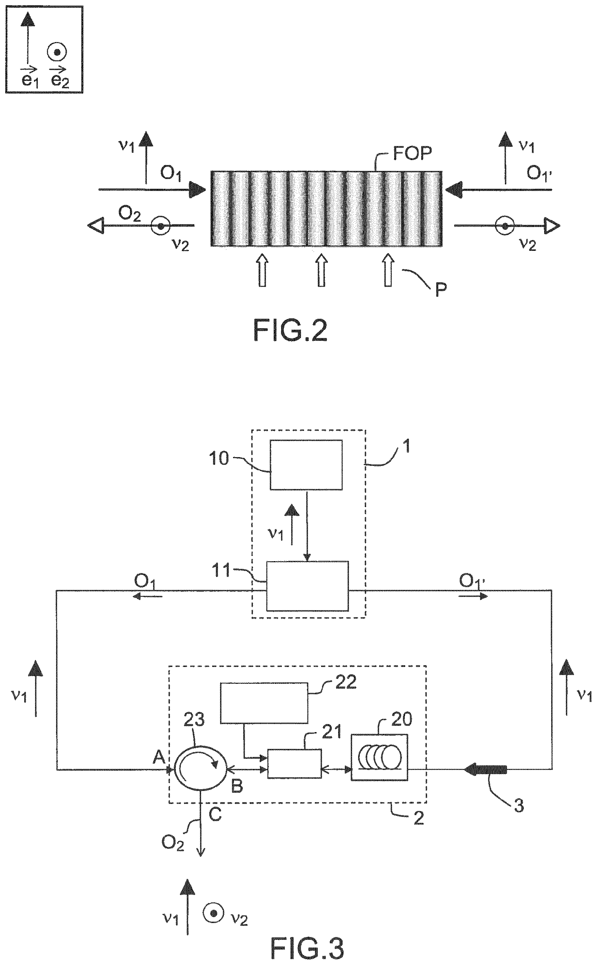

Le principe de l'invention repose sur les considérations illustrée en figure 2, dans laquelle le milieu d'interaction est une fibre amplificatrice à maintien de polarisation, c'est-à-dire fortement biréfringente.

Considérant $\vec{e}_1$ et $\vec{e}_2$ les deux axes propres, d'indices de réfraction *respectifs* $n_e$ et $n_o$, les deux ondes à la fréquence $\nu_1$ étant polarisées selon l'axe $\overline{e_1}$, leur couplage dans le milieu amplificateur génère un réseau de gain cohérent sur toute la longueur de la fibre. Ce dispositif peut être considéré comme une cavité laser DFB (distributed feed-back) injectée à la fréquence $\nu_1$. Certains des photons d'émission spontanée amplifiée polarisés selon l'axe $\vec{e}_2$ peuvent être à l'origine d'une onde oscillant dans cette cavité. Celle-ci doit vérifier les conditions d'accord de phase du DFB. Il s'agit de l'onde $O_2$ (et l'onde $O_2'$) considérées ci-après. L'indice de réfraction vu par cette onde est $n_o \neq n_e$, par conséquent sa longueur d'onde d'accord $\lambda_2$ au réseau DFB diffère de $\lambda_1$ (et sa

fréquence optique $\nu_2 = \dfrac{c}{\lambda_2}$ diffère de $\nu_1 = \dfrac{c}{\lambda_1}$, $c$ et $\lambda_i$ sont pris dans le vide). La relation d'accord de phase s'écrit $\Lambda = \dfrac{\lambda_1}{2n_e}$ pour cette onde, et $\Lambda = \dfrac{\lambda_2}{2n_o}$ pour les ondes $O_1$ et $O_1'$. On en déduit alors la valeur de la fréquence optique de l'onde $O_2$ en fonction de la valeur de la fréquence de l'onde $O_1$ : $\nu_2 = \dfrac{n_e(\nu_1)}{n_o(\nu_2)}\nu_1$.

Cette onde profite du gain moyen du milieu amplificateur, ce qui laisse présager des intensités de sortie satisfaisantes.

A partir des ondes $O_1$ et $O_2$, le battement entre $\nu_1$ et $\nu_2$ (obtenu par détection quadratique sur une photodiode rapide) peut être utilisé comme oscillateur local dans les futurs radars. En effet, une fibre du commerce, dont la biréfringence $\Delta n = n_e - n_o$ se situe dans la gamme $\Delta n \approx 10^{-3}$-$10^{-4}$, provoque une séparation $\Delta\lambda = \lambda_1 - \lambda_2$ entre les deux longueurs d'ondes générées de l'ordre de $\Delta\lambda \approx 0,1$-$1nm$ ; soit un écart de fréquence $\Delta\nu = \nu_1 - \nu_2$ se situant dans la fenêtre $\Delta\nu = \dfrac{\Delta n}{n_o}\nu_1 \approx 10 - 100 GHz$.

Par ailleurs ce type de source de signaux micro-ondes à la fréquence $\Delta\nu$ est accordable. L'accordabilité peut être obtenue, soit en ajustant la valeur de la longueur d'onde d'injection $\lambda_1$, soit en contrôlant la valeur de la biréfringence $\Delta n$ (et ce par des contraintes thermiques ou mécaniques sur la fibre). On peut considérer en première approximation, que la dilatation du réseau, c'est-à-dire la variation de son pas A en fonction de la température peut être négligée devant la dépendance de la biréfringence avec la température. La contribution dominante de la température est alors une variation de biréfringence de l'ordre de $\dfrac{1}{\Delta n}\dfrac{d\Delta n}{dt} \approx 10^{-3} - 10^{-4} /°C$. Ainsi pour un battement $\Delta\nu \approx 40 GHz$, une accordabilité sur une plage de 4-40$MHz/°C$ est possible.

De plus, le dispositif présenté dans le cadre de cette invention est susceptible de présenter d'excellentes caractéristiques en terme de pureté spectrale. En effet, toute perturbation sur l'onde à la fréquence $\nu_1$ est subie à l'identique par l'onde à la fréquence $\nu_2$, pourvu que son temps caractéristique soit supérieur au temps de vie des atomes excités du milieu amplificateur. Ainsi les variations de phase dues par exemple aux variations de longueur de la fibre (fluctuations thermiques), ou bien encore à la source optique fournissant les ondes $O_1$ et $O_1'$, sont intégrées par le réseau de gain.

Différents exemples de réalisation sont décrits ci-après :

Exemple 1

Un premier exemple de réalisation de laser bi-fréquence fibré est illustré en figure 3.

Le milieu actif est une fibre optique à maintien de polarisation dopée erbium, 20. Celle-ci est pompée par une diode laser fibrée à 980 nm, 22, injectée dans la fibre par l'intermédiaire d'un multiplexeur en longueur d'onde 21. Le pompage tel qu'il est représenté sur la figure 3 est co-directionnel : la pompe à 980 nm voyage dans le même sens que l'onde $O_1$ injectée à 1,5 $\mu$m. Notons qu'il est possible d'utiliser un pompage contra-directionnel. L'ensemble constitue le milieu amplificateur 2.

Selon cet exemple, le dispositif source 1, est composé d'un laser continu monofréquence 10 émettant autour de 1,5 $\mu$m polarisé rectilignement et d'un coupleur optique 11 permettant de séparer le faisceau émis en deux faisceaux (ondes $O_1$ et $O_{1'}$) distincts, mais de même état de polarisation rectiligne, et cohérents mutuellement.

Les ondes $O_1$ et $O_{1'}$ sont injectées dans l'amplificateur 2. Sur le schéma de base de la figure 3, l'onde $O_1$ traverse un circulateur optique 23 du point A au point B, avant son injection dans la fibre amplificatrice après passage dans le multiplexeur 21. Aucun retour n'est possible du point B vers le point A. Les ondes $O_{1'}$ (ayant traversé la fibre et interféré avec l'onde $O_1$) et $O_2$ (diffractée et amplifiée à partir du bruit dans la fibre) traversent le circulateur optique du point B au point C où elles sont disponibles pour générer le battement micro-onde recherché. L'isolateur 3 empêche le passage de l'onde $O_1$ amplifiée vers le dispositif source.

Second exemple de réalisation

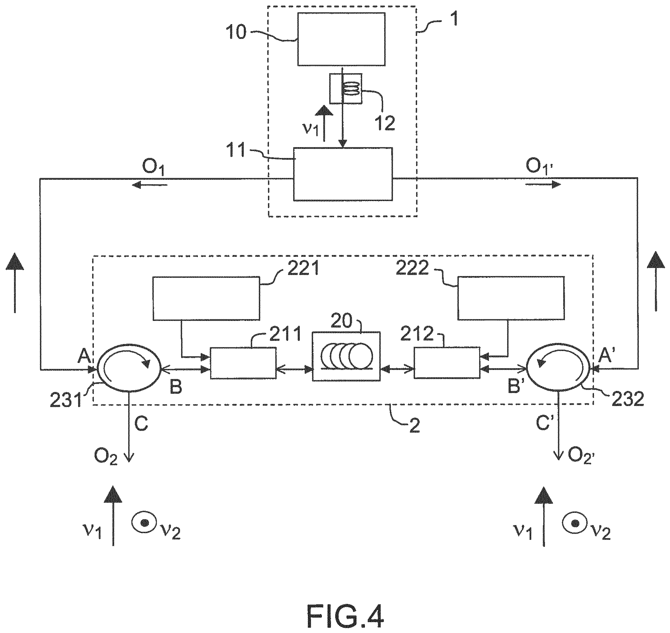

Une autre configuration consiste en un pompage bi-directionnel illustré en figure 4. Deux diodes laser de pompage 221 et 222 et donc deux multiplexeurs 211 et 212 peuvent être utilisés suivant la longueur de fibre 20 utilisée, pour garantir un pompage uniforme sur toute sa longueur; dans ce cas, une diode est placée à chaque extrémité de la fibre. En règle générale, un amplificateur à fibre en pompage co-directionnel possède un facteur de bruit optimisé, et en pompage contra-directionnel, une puissance de sortie élevée. Deux circulateurs optiques 231 et 232 sont également utilisés. Un pompage bi-directionnel peut ainsi tirer parti simultanément de ces deux avantages. Le schéma du pompage optique est à optimiser pour chaque architecture de laser bi-fréquence mise en oeuvre, de façon à maximiser les puissances optiques des ondes laser à 1,5 $\mu$m générées.

Il est à noter que le dispositif source, représenté sur la figure 3, est composé d'un laser continu monofréquence émettant autour de 1,5 $\mu$m polarisé rectilignement et d'un coupleur optique permettant de séparer le faisceau émis en deux faisceaux (ondes $O_1$ et $O_{1'}$) distincts, mais de même état de polarisation rectiligne, et cohérents mutuellement. Il est possible d'utiliser un laser non-polarisé associé à un contrôleur de polarisation 12 fibré (comme illustré en figure 4), dispositif permettant d'obtenir la polarisation désirée à partir d'un état de polarisation quelconque.

Selon cette variante, il est possible de disposer de deux sorties (points C et C'), en utilisant deux circulateurs optiques et les ondes $O_2$ et $O_{2'}$ diffractées dans les deux directions dans la fibre.

Le principe de l'invention a été illustré par un exemple utilisant une fibre dopée erbium. Notons que cet amplificateur peut être remplacé par tout autre type de fibre amplificatrice. En effet, le mélange à deux ondes pour la réalisation d'un laser bi-fréquence peut être envisagé, de manière plus générale, au sein de toute fibre dopée par des ions terre-rare. De telles fibres se trouvent dans le commerce, elles sont dopées ytterbium, néodyme, samarium ou thulium, ou encore co-dopée erbium-ytterbium, thulium-holmium ou erbium-ytterbium. Bien sûr les longueurs d'onde d'absorption (déterminant celles du pompage optique) et d'émission laser varient selon l'amplificateur utilisé. De plus, la concentration du dopant utilisé détermine la forme et la largeur du profil de gain de l'amplificateur. Ainsi par exemple, une fibre dopée erbium est souvent, plus exactement une fibre en silice ($SiO_2$) dopée Ge et dopée Er, i.e Ge/$SiO_2$:Er, mais un dopage Al/P/$SiO_2$:Er permet d'obtenir un spectre de gain d'autant plus large et plat que la concentration en aluminium est élevée.

Le pompage optique décrit précédemment est effectué par une diode laser à 980 nm. D'autres lasers de pompe peuvent être utilisés dans le cas d'un dopage de la fibre amplificatrice par un ion terre-rare différent de l'erbium. Notons que même dans le cas d'une fibre dopée erbium, il est envisageable d'utiliser d'autres transitions d'absorption (autour de 810 nm ou de 1480 nm). Cependant 980 nm et 1480 nm sont les deux longueurs d'onde les mieux adaptées : des diodes lasers à semi-conducteur sont disponibles à ces longueurs d'onde (en AlGaAs pour 980 nm et en InGaAsP pour 1480 nm). Par ailleurs, il est à prévoir que les propriétés des amplificateurs à fibre dopée erbium soient transposées au cas de la présente invention : un pompage à 980 nm permet une inversion de population quasi totale et un rapport signal sur bruit optimum, un pompage à 1480 nm permet des puissances de pompage et de saturation plus élevées (donc plus de gain).

Dans les exemples de réalisation décrit ci-dessus, le faisceau laser à 980 nm est couplé dans le coeur de la fibre dopée, par l'intermédiaire d'un multiplexeur en longueurs d'onde fibré.

D'autres architectures de pompage optique sont possibles, nous allons en donner quelques exemples. Notons toutefois qu'il s'agit de méthodes typiquement réservées aux amplificateurs à fibre de forte puissance, dans lesquels il est nécessaire d'injecter des faisceaux pompes très intenses (diodes lasers de puissance ou barrettes de diodes laser) sans endommager le coeur de la fibre. La première possibilité est d'utiliser des fibres dopées possédant deux gaines concentriques ou bien plusieurs coeurs. Dans ce cas, l'onde de pompe est couplée dans la gaine supplémentaire ou dans un coeur supplémentaire, d'aire suffisamment grande pour éviter tout dommage.

Une seconde possibilité est l'utilisation d'une fibre dopée dont la gaine est creusée en V (« V-groove »). La pompe est alors injectée par la tranche de la fibre et elle se propage par réflexions au sein de la gaine, croisant le coeur dopé à chaque réflexion comme décrit dans le brevet US Patent 6,529,657 : « Angle selective side-pumping of fiber amplifiers and lasers », L. Goldberg (Fairfax, VA), M. LeFlohic (Saint Quey Perros, FR), *Keopsys* Inc. (Fairfax, VA). March 4, 2003.

Dans l'architecture type de la présente invention, la source laser (à 1,5 μm) est un laser état solide pompé par diode, de largeur spectrale très fine, afin que les ondes interférant dans la fibre soient cohérentes tout au long de leur propagation. La longueur maximale de la fibre amplificatrice utilisée dans le cadre de la présente invention est de l'ordre de celle des amplificateurs à fibre soit une vingtaine de mètres. Une source laser cohérente sur 20 m, possédant donc une largeur spectrale voisine de 15 MHz, (diodes lasers à semi-conducteur type DFB du commerce typiquement) est de qualité suffisante pour obtenir le fonctionnement bi-fréquence.

Troisième exemple de réalisation :

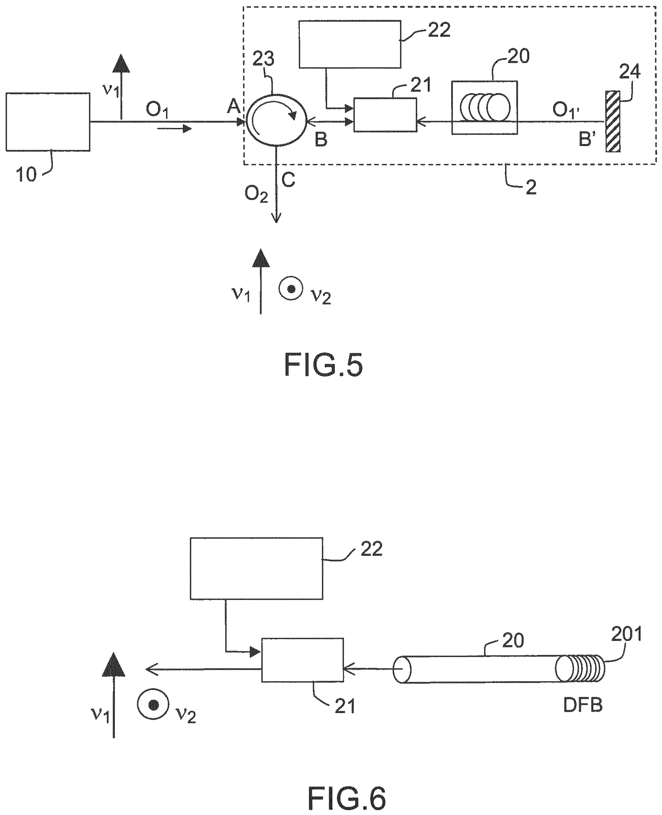

Une architecture de laser bi-fréquence, injecté par une seule extrémité de la fibre est représentée sur la figure 5. Dans cette configuration, le réseau de gain est créé par l'interférence entre l'onde $O_1$, provenant du laser source, et la réflexion de l'onde $O_{1'}$ sur un miroir 24 (de coefficient de réflexion R) placé à l'autre extrémité de la fibre dopée. Le miroir peut être soit l'extrémité même de la fibre (« cleavée » à l'angle souhaité en fonction de la réflexion désirée), soit un composant (miroir de Bragg ou métallique) connecté ou soudé en bout de fibre.

Pour une valeur $g_0$ (gain petit signal de l'amplificateur) fixée, l'efficacité du réseau de gain est directement liée au rapport des puissances entre les ondes interférant (aux pertes du multiplexeur près) : $P_{B'}/P_B = Re^{g_0 L}$ ($P_B$ : puissance injectée au point B; $P_{B'}$ : puissance de l'onde réfléchie au point B').

Outre sa simplicité de mise en oeuvre, cette architecture permet l'économie de composants (coupleur et isolateur ou circulateur) et présente l'avantage d'être fortement insensible aux variations de phase subies par l'onde avant son injection dans l'amplificateur.

Il est possible de combiner le réseau de gain dynamique (par mélange d'ondes dans la fibre amplificatrice), avec l'inscription d'un miroir de Bragg fixe (par des techniques UV standards).

Le laser bi-fréquence résultant est alors du type de celui présenté sur la figure 6. La section de fibre sur laquelle est inscrit le réseau fixe 201 (de l'ordre de quelques centimètres de long) peut-être soit l'extrémité de la fibre dopée à maintien de polarisation, soit un tronçon de fibre standard à maintien de polarisation dont les valeurs des indices ordinaire et extraordinaire coïncident parfaitement avec ceux de la fibre dopée. Le réseau dynamique prend naissance dans la fibre dopée avec les conditions d'accord de phase imposées par la présence du miroir de Bragg fixe.

L'avantage de cette configuration est que seule une diode de pompage est nécessaire au fonctionnement du laser bi-fréquence, la source d'injection à 1,5 μm est supprimée. Le dispositif fonctionne comme un laser DFB de grande longueur (éventuellement de l'ordre de quelques mètres), composant prometteur en terme de gain laser et de sélectivité spectrale et dont la fabrication par inscription UV est inenvisageable.

Notons que dans cette configuration il ne paraît pas exclu de supprimer également le multiplexeur, en pompant dans un sens et en collectant le signal laser à 1,5 μm dans le sens opposé.

## Revendications

**1.** Laser bi-fréquence fibré comportant une source optique laser (1) émettant au moins une onde optique polarisée principale à une première longueur d'onde $(\lambda_1)$,

un milieu amplificateur fibré (2), et

des moyens pour faire interférer (11, 24, 201) deux ondes optiques primaires $(O_1, O_{1'})$ issues de l'onde optique polarisée principale, les deux ondes optiques primaires étant :

○ de même fréquence optique $\nu_1 = \dfrac{c}{\lambda_1}$ .

○ de même état de polarisation, ledit état étant polarisé selon un axe propre $\vec{e}_1$, $\vec{e}_1$ et $\vec{e}_2$ étant les deux axes propres, des indices de réfraction respectifs $n_e$ et $n_o$ de la fibre optique dopée

- ledit milieu amplificateur comportant une fibre optique dopée, à maintien de polarisation et préalablement pompée optiquement pour atteindre une inversion de population entre deux niveaux d'énergie, ladite fibre étant fortement biréfringente de biréfringence $\Delta n = n_e - n_o$;
- le couplage des deux ondes optiques primaires dans le milieu amplificateur créant un réseau de diffraction au sein dudit milieu amplificateur fibré, et ansi un réseau de gain cohérent sur toute la longueur de la fibre et une cavité laser DFB à la fréquence $\nu_2$ selon l'axe de la fibre correspondent à l'indice de réfraction $n_o$, la cavité laser DFB étant injectée à la fréquence $\nu_1$,

- certains des photons d'émission spontanée amplifiée polarisés selon l'axe $\vec{e}_2$ étant à l'origine d'une seconde onde oscillante $(O_2, O_{2'})$ à la fréquence optique $v_2$ correspondant à la longueur d' onde $\lambda_2$ et définie par l'équation suivante :

$$v_2 = \frac{n_e(v_1)}{n_o(v_2)} v_1 \quad ,$$

le pas du réseau répondant aux deux équations :

$$\Lambda = \lambda_1 / 2n_e \text{ et } \Lambda = \lambda_2 / 2n_o,$$

- ledit laser bi-fréquence émettant en sortie dudit milieu amplificateur aux fréquences optiques $v_1$ et $v_2$, et
ledit laser bi-fréquence fibré comprenant: un circulateur optique (23) qui est traversé par une des deux ondes optiques primaires $(O_1')$ et par la seconde onde oscillante $(O_2)$, de façon à générer le battement entre lesdites ondes $(O_1', O_2)$ de fréquence $v_1$ et $v_2$.

2. Laser bi-fréquence fibré selon la revendication 1, **caractérisé en ce qu'**il comporte un coupleur permettant de créer les deux ondes optiques primaires à partir de la onde optique principale $(O_1, O_{1'})$.

3. Laser bi-fréquence fibré selon l'une des revendications 1 à 2, **caractérisé en ce que** le milieu amplificateur (2) comporte une fibre optique (20), une pompe optique (22) et un multiplexeur en longueur d'onde (21).

4. Laser bi-fréquence fibré selon l'une des revendications 1 à 3, **caractérisé en ce que** le milieu amplificateur (2) comporte une fibre optique dopée possédant deux gaines concentriques ou plusieurs coeurs.

5. Laser bi-fréquence fibré selon l'une des revendications 1 à 3, **caractérisé en ce qu'**il comporte sur le trajet de chacune des ondes optiques primaires un circulateur (231, 232), de manière à récupérer en sortie dudit laser bi-fréquence, deux ondes optiques secondaires $(O_2, O_{2'})$.

6. Laser bi-fréquence fibré selon la revendication 4, **caractérisé en ce que** le milieu amplificateur (2) comporte une fibre optique (20), deux pompes optiques (221, 222) et deux multiplexeurs en longueur d'onde (211, 212).

7. Laser bi-fréquence fibré selon la revendication 1, **caractérisé en ce qu'**il comporte des moyens de réflexion (24) de ladite onde principale de manière à créer le réseau de diffraction par interférence entre ladite onde optique principale et l'onde réfléchie de ladite onde optique principale.

8. Laser bi-fréquence fibré selon la revendication 7, **caractérisé en ce que** les moyens de réflexion comportent un composant de type miroir de Bragg, fibré ou pas, ou miroir métallique.

9. Laser bi-fréquence fibré selon la revendication 6, **caractérisé en ce que** le milieu amplificateur comporte une fibre optique intégrant une extrémité réflectrice (201) vis à vis de l'onde optique principale.

**Patentansprüche**

1. Faser-Zweifrequenzlaser, umfassend eine optische Laserquelle (1), die mindestens eine polarisierte optische Hauptwelle mit einer ersten Wellenlänge $(\lambda_1)$ emittiert, ein Faser-Verstärkungsmedium (2), und ein Mittel zum Interferieren (11, 24, 201) von zwei optischen Hauptwellen $(O_1, O_{1'})$, die aus der polarisierten optischen Hauptwelle hervorgehen; wobei die zwei optischen Hauptwellen wie folgt sind:

∘ mit derselben optischen Frequenz $v_1 = \dfrac{c}{\lambda_1}$ ;

∘ mit demselben Polarisationszustand, wobei der Zustand gemäß einer eigenen Achse $\vec{e}_1$ polarisiert ist;
wobei $\vec{e}_1$ und $\vec{e}_2$ die zwei eigenen Achsen der Refraktionsindizes $n_e$ und $n_o$ der dotierten optischen Faser sind;

- das Verstärkungsmedium umfassend eine dotierte optische Faser zum Beibehalten der Polarisation, und die vorher optisch gepumpt ist, um eine Populationsinversion zwischen zwei Energieebenen zu erreichen, wobei die Faser stark doppelbrechend mit einer Doppelbrechung $\Delta n = n_e - n_o$, sind;
- wobei die Kopplung der zwei optischen Hauptwellen im Verstärkungsmedium ein Diffraktionsnetz im Bereich des Faser-Verstärkungsmediums schafft, sowie ein Verstärkungsnetz, das über die gesamte Faserlänge kohärent ist, und sowie eine Laserkavität DFB mit der Frequenz $v_2$ entlang der Achse der Faser entsprechend dem Refraktionsindex $n_o$, wobei die Laserkavität DFB mit der Frequenz $v_1$ eingespeist wird,
- wobei bestimmte der polarisierten Photonen mit verstärkter spontaner Emission gemäß der Achse $\vec{e}_2$ am Anfang eine einer zweiten oszillierenden Welle $(O_2, O_{2'})$ mit

der optischen Frequenz $v_2$ entsprechend der Wellenlänge $\lambda_2$ sind, und

- definiert durch die folgende Gleichung:

$$v_2 = \frac{n_e(v_1)}{n_o(v_2)} v_1$$

- wobei die Steigung des Netzes den folgenden zwei Gleichungen entspricht: $\Lambda = \lambda 1/2n_e$ und $\Lambda = \lambda 2/2n_o$,
- wobei der Zweifrequenzlaser am Ausgang des Verstärkungsmediums mit optischen Frequenzen v1 und v2 emittiert, der Faser-Zweifrequenzlaser umfassend: einen optischen Zirkulator (23), der von einer der zwei optischen Hauptwellen (O1') und von der zweiten oszillierenden (02) durchquert wird, um die Schwebung zwischen den Wellen (O1',O2) mit einer Frequenz v1 und v2 zu erzeugen.

2. Faser-Zweifrequenzlaser nach Anspruch 1, **dadurch gekennzeichnet, dass** er einen Koppler umfasst, der es ermöglicht, die zwei optischen Hauptwellen anhand der optischen Hauptwelle ($O_1$, $O_{1'}$) zu schaffen.

3. Faser-Zweifrequenzlaser nach einem der Ansprüche 1 bis 2, **dadurch gekennzeichnet, dass** das Verstärkungsmedium (2) eine optische Faser (20), eine optische Pumpe (22) und einen Wellenlängen-Multiplexer (21) umfasst.

4. Faser-Zweifrequenzlaser nach einem der Ansprüche 1 bis 3, **dadurch gekennzeichnet, dass** das Verstärkungsmedium (2) eine dotierte optische Faser umfasst, die zwei konzentrische Hüllen oder mehrere Kerne besitzt.

5. Faser-Zweifrequenzlaser nach einem der Ansprüche 1 bis 3, **dadurch gekennzeichnet, dass** er über den Verlauf von jeder der optischen Hauptwellen einen Zirkulator (231, 232) umfasst, um am Ausgang des Zweifrequenzlasers zwei sekundäre optische Wellen ($O_2$, $O_{2'}$) wiederzuerlangen.

6. Faser-Zweifrequenzlaser nach Anspruch 4, **dadurch gekennzeichnet, dass** das Verstärkungsmedium (2) eine optische Faser (20), zwei optische Pumpen (221, 222) und zwei Wellenlängen-Multiplexer (211, 212) umfasst.

7. Faser-Zweifrequenzlaser nach Anspruch 1, **dadurch gekennzeichnet, dass** er Reflexionsmittel (24) der Hauptwelle umfasst, um das Diffraktionsnetz durch Interferenz zwischen der optischen Hauptwelle und der reflektierten Welle der optischen Hauptwelle zu schaffen.

8. Faser-Zweifrequenzlaser nach Anspruch 7, **dadurch gekennzeichnet, dass** die Reflexionsmittel eine Komponente vom Typ Bragg-Spiegel (aus Faser oder nicht) oder Metallspiegel umfassen.

9. Faser-Zweifrequenzlaser nach Anspruch 6, **dadurch gekennzeichnet, dass** das Verstärkungsmedium eine optische Faser umfasst, die über ein reflektierendes Ende (201) gegenüber der optischen Hauptwelle verfügt.

## Claims

1. A dual-frequency fibre laser comprising a laser optical source (1) emitting at least one main polarised optical wave at a first wavelength ($\lambda_1$), a fibre amplifier medium (2) and means (11, 24, 201) for interfering with two primary optical waves ($O_1$, $O_{1'}$) coming from said main polarised optical wave, said two primary optical waves being:

   ◦ the same optical frequency $V_1 = \dfrac{c}{\lambda_1}$ ;

   ◦ the same polarisation state, said state being polarised along an Eigen axis $\vec{e}_1$;
   $\vec{e}_1$ and $\vec{e}_2$ being the two own axes of the respective refraction indices $n_e$ and $n_o$ of the doped optical fibre;

   - said amplifier medium comprising a polarisation-maintaining doped optical fibre and being previously optically pumped to achieve a population inversion between two energy levels, said fibre being highly bi-refringent with bi-refringence $\Delta n = n_e - n_o$;
   - the coupling of said two primary optical waves in the amplifier medium generating a diffraction grating within said fibre amplifier medium and thus generating a coherent gain grating over the entire length of the fibre and a DFB laser cavity at the frequency $v_2$ along the axis of the fibre corresponding to the refraction index no, the DFB laser cavity being injected at the frequency $v_1$;
   - some of the amplified spontaneous emission photons polarised along the axis $\vec{e}_2$ being the source of a second oscillating wave (02, 02') at the optical frequency $v_2$ corresponding to the wavelength $\lambda 2$ and being linked to the gain grating pitch by the equation $\Lambda = \lambda 2 /2n_o$, with, moreover, A = being defined by the following equation:

$$v_2 = \frac{n_e(v_1)}{n_o(v_2)} v_1 ;$$

- the pitch of the grating responding to the two equations: $\Lambda = \lambda 1/2ne$ and $\Lambda=\lambda2=2no$,
- said dual-frequency laser emitting out of said amplifier medium at the optical frequencies $v_1$ and $v_2$, and said dual-frequency fibre laser comprising: an optical circulator (23), through which passes one of said two primary optical waves (O1') and said second oscillating wave (02), so as to generate the beat between said waves (O1',O2) at the frequency $v_1$ and $v_2$.

2. The dual-frequency fibre laser according to claim 1, **characterised in that** it comprises a coupler allowing the two primary optical waves to be generated from said main optical wave ($O_1$, $O_{1'}$).

3. The dual-frequency fibre laser according to any one of claims 1 to 2, **characterised in that** said amplifier medium (2) comprises an optical fibre (20), an optical pump (22) and a wavelength multiplexer (21).

4. The dual-frequency fibre laser according to any one of claims 1 to 3, **characterised in that** said amplifier medium (2) comprises a doped optical fibre with two concentric sheaths or a plurality of cores.

5. The dual-frequency fibre laser according to any one of claims 1 to 3, **characterised in that** it comprises a circulator (231, 232) on the path of each primary optical wave, so as to recover two secondary optical waves ($O_2$, $O_{2'}$) at the output of said dual-frequency laser.

6. The dual-frequency fibre laser according to claim 4, **characterised in that** said amplifier medium (2) comprises an optical fibre (20), two optical pumps (221, 222) and two wavelength multiplexers (211, 212).

7. The dual-frequency fibre laser according to claim 1, **characterised in that** it comprises means (24) for reflecting said main wave, so as to generate the diffraction grating through interference between said main optical wave and the reflected wave of said main optical wave.

8. The dual-frequency fibre laser according to claim 7, **characterised in that** said reflection means comprise a fibre or non-fibre component of the Bragg mirror type or a metallic mirror.

9. The dual-frequency fibre laser according to claim 6, **characterised in that** said amplifier medium comprises an optical fibre integrating a reflective end (201) opposite said main optical wave.

P

FOP

N₂ ●●●●●●●●●●●●●●●●●●●●●●●●●

N₁

## FIG.1a

P

ν₁
O₁

ν₁
O₁'

Réseau de gain

N₂ ●●●●●●  ●  ●●●●●●  ●  ●●●●●●

N₁

Réseau d'intensité

## FIG.1b

P

O₁'

O₁

O₂

## FIG.1c

EP 2 179 326 B1

FIG.2

FIG.3

11

FIG.4

FIG.5

FIG.6

**EP 2 179 326 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6529657 B

**Littérature non-brevet citée dans la description**

- **T. HIDAKA ; S. MATSUURA ; M. TANI ; K. SAKAI.** CW terahertz wave generation by photomixing using a two-longitudinal mode laser diode. *Electron. Lett. Vol.,* 1997, vol. 33, 2039
- **M.D. PELUSI ; HF LIU ; D. NOVAK.** THz optical beat frequency generation from a single mode locked semiconductor laser. *Appl. Phys. Lett.,* 1997, vol. 71, 449
- **X. WANG, W. ; MAO, M. ; AL-MUMIN, S. A. ; PAPPERT, J. ; HONG ; G. LI.** Optical generation of microwave/millimeter-wave signals using two-section gain-coupled DFB lasers. *IEEE Phot. Tech. Lett.,* 1999, vol. 11 (10), 1292
- **M. ALOUINI ; B. BENAZET ; M. VALLET ; M. BRUNEL ; P. DI BIN ; F. BRETENAKER ; A. LE FLOCH ; P. THONY.** Offset phase locking of Er: Yb: Glass Laser eigenstates for RF Photonics applications. *IEEE Phot. Tech. Lett.,* 2001, vol. 13 (4), 367
- **A.J.C. VIEIRA ; P.R. HERCZFELD ; A. ROSEN, M. ERMOLD ; E.E. FUNK ; W.D. JEMISON ; K.J. WILLIAMS.** A mode-locked microchip laser optical transmitter for fiber radio. *IEEE TTTM,* 2001, vol. 49 (10), 1882
- **L. MORVAN ; D. DOLFI ; J.-P. HUIGNARD ; S. BLANC ; M. BRUNEL ; M. VALLET ; F. BRETENAKER ; A. LE FLOCH.** Dual-frequency laser at 1.53 $\mu$m for generating high-purity optically carried microwave signals up to 20 GHz. *CLEO,* 2004

- **W.H. LOH ; J.P. DE SANDRO ; G.J. COWLE ; B.N. SAMSON ; A.D. ELLIS.** 40 GHz optical-millimetre wave generation with dual polarisation distributed feedback fibre laser. *Electr. Lett.,* 1997, vol. 33 (7), 594
- **S.V. CHERNIKOV ; R. KASHYAP ; P.F. MCKEE ; J.R. TAYLOR.** Dual frequency all fibre grating laser source. *Electr. Lett.,* 1993, vol. 29 (12), 1089
- **S. LI ; H. DING ; K.T. CHAN.** Erbium-doped fibre lasers for dual wavelength operation. *Electr. Lett.,* 1997, vol. 33 (1), 52
- **S. J. FRISKEN.** Transient Bragg reflection gratings in erbium-doped fiber amplifiers. *Optics Letters,* 15 Décembre 1992, vol. 17 (24
- **A. BRIGNON ; G. FEUGNET ; J.-P. HUIGNARD ; J.-P. POCHOLLE.** Efficient degenerate four-wave mixing in a diode-pumped microchip Nd:YV04 amplifier. *Opt. Lett.,* 1995, vol. 20 (6), 548-550
- **P. YEH.** Two-wave mixing in nonlinear media. *IEEE. J. Quantum Electr.,* 1989, vol. 25 (3), 484-518
- **S.T. FISKEN.** Transient Bragg Reflection gratings in erbium-doped fiber amplifiers. *Opt. Lett.,* 1992, vol. 17 (24), 1776-1778
- **B. FISCHER ; J.L. ZYSKIND ; J.W. SULHOFF ; D.J. DIGIOVANNI.** Nonlinear wave mixing and induced gratings in erbium-doped fiber amplifiers. *Opt. Lett.,* 1993, vol. 18 (24), 2108-2110